# EUROPEAN PATENT APPLICATION

(11) **EP 2 258 811 A1**
(43) Date of publication of application: **08.12.2010**
(21) Application number: 09720793.0
(22) Date of filing: 12.03.2009
(51) Int. Cl.: C10B 53/02, C04B 35/56, C04B 35/565, C01B 31/30, C01B 31/36

(54) **METHOD FOR PRODUCING POROUS CERAMICS AND MULTIPHASIC MATERIALS FROM CELLULOSIC PRECURSORS**

(30) Priority: 14.03.2008 ES 200800743
(71) Applicant: Universidad de Sevilla, 41013 Sevilla (ES)
(72) Inventor: MARTÍNEZ FERNÁNDEZ, Julián, E-41012 Sevilla (ES); RAMÍREZ DE ARELLANO LÓPEZ, Antonio, E-41012 Sevilla (ES); VARELA FERIA, Francisco, E-41012 Sevilla (ES)
(74) Representative: Temino Ceniceros, Ignacio
(86) International application number: PCT/ES2009/000139
(87) International publication number: WO 2009/112619

(57) **Abstract**

The invention relates to a method for producing porous ceramics and advanced multiphasic materials from plant precursors, concretely from the infiltration of metallic alloys into carbon preforms obtained by pyrolysis of celluclosic precursors. The invention also relates to a method for joining said materials. The invention especially applies to the obtention of raw materials that can be used in a wide spectrum of the industry in order to obtain components for applications based on the properties thereof relating to hardness, resistance to friction, thermal conductivity, electroconductivity, mechanical resistance, high specific surface area, porosity, resistance to corrosion, resistance to thermal shock, and low density.

## Description

### PURPOSE OF THE INVENTION

The invention relates to a method for producing porous ceramics and advanced materials from plant precursors, specifically from the infiltration of metallic alloys into carbon preforms obtained by pyrolysis of cellulosic precursors. The invention also includes a procedure for joining these materials.

The invention basically applies to the acquiring of raw materials that can be used in a wide spectrum of the industry in order to obtain components for applications based on the properties thereof relating to harness, resistance to friction, thermal conductivity, electro conductivity, mechanical resistance, high specific surface area, porosity, resistance to corrosion, resistance to thermal shock and low density.

### STATE OF THE ART

The researching of new ceramic materials has been caused by the limitations of metallic alloys for being used in structural applications and/or in environments subjected to high temperatures [1]. Ceramic materials possess a higher fusion point than metals, which enables them to withstand for long periods of time, the effects of temperature and mechanical forces. The development of materials that can be used at higher temperatures than metals (>1000 °C), possess many advantages and new applications; for example: higher engine and turbine working temperatures increase their efficiency and reduce the emission of polluting gases [2-5].

One of these ceramics is Silicon Carbide (SiC). This material was synthesized for the first time in 1890 by E. G. Acheson (in an attempt to manufacture artificial diamonds); it does not exist naturally, although their formation has been detected in meteorites. This ceramic possesses the following properties, which in general makes it the best candidate to be used for structural applications at high temperatures, better than other ceramic materials such as Alumina (Al₂O₃), Silicon Nitride (Si₃N₄) or Zirconium (ZrO₂) [5]:
- Low density - Very important for aerospace applications.
- High resistance to high temperatures - In does not significantly decrease with temperature until it reaches 1500 °C.
- Low thermal expansion coefficient - It does not create tension at contact areas with other components during the heating cycles.
- High thermal conductivity - Prevents overheating of the ceramic metal joints.
- High chemical stability - The decomposition temperature is 2400 °C.
- Excellent resistance to corrosion and oxidation.
- High resistance to thermal shock.
- High resistance to temperature abrasion.
- High hardness - very close to the hardness of diamonds.
- Resistance to the appearance of hairline cracks - It is lower than that of other ceramics. The improvement of this property in SiC is one of the current challenges in materials science [6].

The main limitation for using this material has been the manufacturing of macroscopic size pieces. Silicon Carbide dust has been used as an abrasive material ever since its discovery. During the Second World War, an attempt was made to use it as a heating element; however, it was impossible to obtain SiC pieces with a high density. In 1974 S. Prochaza [7, 8] discovered that it was possible to fabricate SiC pieces from compacted dust at high temperature (sinterized) with small additions of boron and carbon. From this moment, SiC received great attention for its use in the following fields of application [2-5, 9, 10]:
- Components resistant to abrasion and corrosion - Mechanical joints, valves, thinning of surfaces, paper industry cutting tools, etc.
- Temperature resistant components - Heat exchangers, ceramic fans, heating elements, protective pipes, etc.
- Engine and turbine components.
- Components for the steel industry and other metals (refinement and manufacturing).
- Catalyst holders
- Cooling walls in nuclear fusion reactors.

The primary fabrication methods for SiC parts are:

### • Hot sintering without pressure [11-13].

SiC dust is mixed with small quantities of B and C and is heated to temperatures between 2000 - 2300 °C.

Disadvantages:
✔ High temperatures make it necessary to use the most expensive technologies.
✔ Temperature control is critical and can only be accomplished using optic pyrometers, which present precision problems.
✔ Transformations can occur between the different polymorphisms of SiC resulting in an increased anomalous grain size.
✔ Needs a final finish, which considerable increases the cost due to the resistance of the material to wear.
✔ The resistance of the final product is considerable reduced at high temperatures.
✔ The additives used for sintering may alter other properties such as resistance to corrosion.

### • Hot sintering with pressure [14].

Produces materials with a greater resistance than those produced by sintering without pressure.

Disadvantages:
✔ It is only applicable to simple geometric shapes.
✔ The cost is even higher than the cost of sintering without pressure.

### • Chemical deposition in vapour phase [15, 16].

It occurs from the reaction of a gas that contains Si and C, being deposited afterwards on a substrate. Produces pure SiC without additives.

Disadvantages:
✔ Only thin layers can be made.
✔ The speed of growth is very slow.
✔ The size of the grains varies systematically during the deposition process.
✔

### • Compacted by reaction [17, 18].

A mixture of SiC dust and C is made to react with gaseous or liquid SiC.

The fabrication temperature is lower than (1410 °C)

Disadvantages:
✔ The contact areas between SiC grains are small and the material has a very low resistance to high temperature since it is controlled by the silicon flow [19-21].

### • Reactive infiltration [22-25].

Fabrication of Silicon Carbide from the infiltration of liquid silicon in artificial carbide preforms.

### Disadvantages:

✔ The structure needs optimization in its interconnectivity and has no direction. The pores are uniform in size without hierarchical order, which limits certain applications in which the specific surface is important.

### • Fabrication by pyrolysis and infiltration with silicon from plant precursors.

A patent exists regarding the fabrication of Silicon Carbide from the infiltration of liquid Silicon in natural carbide preforms [26-27], which have been a step prior to the developing of the technology that is being presented.

The microstructure and properties of these SiC ceramics fabricated by infiltration of liquid Silicon in plant carbon are described in several publications [28-37], as well as the modelling of the fabrication process [38] and of its mechanical behaviour [39].

The results obtained, indicate that these ceramics have multiple advantages over those obtained via other fabrication procedures, which makes them susceptible to being used in a wide range of applications [40].

The invention to be patented is an addition of new processes to the fabrication process for Silicon Carbide biometric materials or a modification of these, which enables to obtain porous ceramics and advanced multiphase materials with a large range of compositions and phases. The invention also includes a procedure for joining these materials.

The invention basically applies to the acquiring of raw materials that can be used in a wide spectrum of the industry in order to obtain components for applications based on the properties thereof relating to harness, resistance to friction, thermal conductivity, electro conductivity, mechanical resistance, high specific surface area, porosity, resistance to corrosion, resistance to thermal shock and low density.

The processes included in this addition patent have not been published in scientific publications by the inventors and no patents exist for these processes.

### REFERENCES

1. W. D. Kingery, "Social needs and ceramic technology", Am. Ceram. Soc. Bull., 59(6), 598-600 (1980).
2. H. B. Strock, Spectrum Materials Manufacturing, 35, 1-11 (1992).
3. J. D. Cawley and C. E. Semler, "Silicon Carbide 87" Ceramic Transations vol.2, American Ceramics Society (1987).
4. S. J. Dapkunas, "Ceramics Heat Exchangers", Am. Ceram. Soc. Bull., 67 [2] 388-91 (1988).
5. K. Yamada y M. Mori, "Properties and applications of SiC ceramics", in "Silicon carbide ceramics", pages. 13-44, Elsevier Applied Science, ISBN 1-85166-560-9, 1991.
6. R. Naslain, "Materials design and processing of high temperature matrix composites: state of the art and future trends", Adv. Composite mater. Vol. 8, No. 1, pages. 3-16, 1999.
7. S. Prochazka, GE report, SRD-72-035, 1972.
8. S. Prochazca, "The role of boron and carbon in the sintering of silicon carbide", Special Ceramics Vol. 6, British Ceramics Research Association, 171-81, 1975.
9. G. Wei, and V. Tennery, "Evaluation of tubular ceramics heat exchanger materials in residual oil combustion environments", ORNL/TM-757, 1981.
10. G. Trantina, "Design techniques for ceramics in fusion reactors", Nucl. Eng. Des. 54(1), 676-677, 1979.
11. C. Greskovic y J. H. Rosolowski, "Sintering of covalent solids", J. Am. Ceram. Soc, 59(7-8), p. 336-43, 1976.
12. W. Bocker y H. Hausner, "Observations on the sintering characteristic of submicrom silicon carbide powders", Science of Ceramics 9, pp. 168-75, 1977.
13. H. Tanaka, "Sintering of SiC", en "Properties and applications of SiC ceramics, "Silicon carbide ceramics", pp. 213-238, Elsevier Applied Science, ISBN 1-85166-560-9, 1991.
14. R. A. Alliegro, L. B. Coffin y J. R. Tinklepaught, J. Am. Ceram. Soc. 39, p. 386 (1956).
15. T. Hirai, y M. Sasaki, "SiC prepared by chemical vapor deposition", in "Properties and applications of SiC ceramics, "Silicon carbide ceramics", pp. 77-98, Elsevier Applied Science, ISBN 1-85166-560-9, 1991.
16. T Hirai, H. Asakura, y M Sasaki, Bull. Japan Inst. Met, 26, p. 809 (1987).
17. C. Forrest, P. Kenedy and J. Shennan, "The fabrications and properties of self-bonded silicon carbide", Special Ceramics, Vol. 5, pages. 99-123, 1972.
18. O. Chakrabati, S. Ghosh y J. Mukerji, "Influence of grain size, free silicon content and temperature in the strength and toughness of reaction bonded silicon carbide", Ceramics International, 5(2), 118-123, 1991.
19. B. John, and J. Wachtman, "Structural Ceramics" Vol. 29, Academic Press, 91-163, 1989.
20. Hockey B.J., and Wiederhorn S.M., "Effect of microstructure on the creep of siliconized silicon carbide", J. Am. Ceram. Soc. 75 [7] 1822-30 (1992).
21. Sheldon M. Wiederhorn, B. J. Hockey and J. D. French, "Mechanisms of deformation of silicon nitride and silicon carbide at high temperatures", J. European Ceramic Society, Volume 19, Issues 13-14, 2273-2284, 1999.
22. Singh M y Behrendt DR, "Reactive melt infiltration of silicon-niobium alloys in microporous carbon", J. Mater. Res., 1994;9:1701.
23. Singh M y Behrendt DR., "Reactive melt infiltration of silicon-molybdenum alloys in microporous carbon", Mater. Sci. and Eng., 1995;A194:193.
24. Singh M and Behrendt DR, "Microstructure and mechanical properties of reaction-formed silicon carbide (RFSC) ceramics", Mater. Sci. and Eng., 1994; A187:183.
25. Munoz A, Martinez Fernández J, Dominguez Rodriguez A, and Singh M, "High temperature compressive strength of reaction formed silicon carbide (RFSC) ceramics", J. Europ. Ceram. Soc., 1998;18:65.
26. Procedure to fabricate Silicon Carbide from plant precursors. Spanish patent P200102278 (9/2001).
27. Procedure to fabricate silicon carbide ceramics from natural precursors. International patent PCT/ES 02/ 00483 (4/11/2002).
28. J. Martínez-Fernández, F.M. Valera-Feria and M. Singh, "Microstructure and thermomechanical characterizacion of bimorphic silicon carbide-based ceramics", Scripta Materialia 43 (2000) 813-818.
29. Martínez-Fernández J., Valera-Feria F. M., and Dominguez Rodriguez A. and Singh M., "Microstructure and thermomechanical characterizacion of bimorphic silicon carbide-based ceramics, Environment Conscious Materials"; Ecomaterials. ISBN: 1-894475-04-6. Canadian Institute of Mining, Metallurgy, and Petroleum., pages. 733-740 (2000).
30. F.M. Varela-Feria, J. Martínez-Fernández, A.R. de Arellano-López, and M. Singh, "Low Density Biomorphic Silicon Carbide: Microstructure and Mechanical Properties", J. Europ. Ceram. Soc., Vol. 22 [14-15] pages. 2719-2725 (2002).
31. M. Singh, J. Martínez-Fernández and A.R. de Arellano-López, "Environmentally Conscious Ceramics (Ecoceramics) from Natural Wood Precursors", Current Opinions on Solid State & Material Science Vol. 7, pages. 247-254 (2003).
32. Y. Kardashev, I. Burenkov, B.Smirnov, A.R.de Arellano-López, J. Martinez-Fernández, F.M. Varela-Feria, Elasticity and Inelasticity of Biomorphic Silicon Carbide Ceramics, Physics of the Solid State, V.46, N10 (2004) 1873-1877.
33. T.S. Orlova, B.I. Smirnov, A.R. de Arellano López, J. Martínez Fernández, R. Sepúlveda, Anisotropy of electric resistivity of Sapele-based biomorphic SiC/Si composites, Physics of the Solid State, V.47, N2 (2005), 220-223 34. L. S. Parfen'eva, B. I. Smirnov, I. A. Smirnov, H. Misiorek, J. Mucha, A. Jezowski, A. R. de Arellano-Lopez, J. Martinez-Fernandez, and R. Sepúlveda. Thermal Conductivity of Bio-SiC and the Si Embedded in Cellular Pores of the SiC/Si Biomorphic Composite. Physics of the Solid State, Vol. 49, No. 2, pages. 211-214 (2007).
35. T. S. Orlova, D. V. Il'in, B. I. Smirnov, I. A. Smirnov, R. Sepulveda, J. Martinez-Fernandez, and A. R. de Arellano-Lopez. Electrical Properties of Bio-SiC and Si Components of the SiC/Si Biomorphic Composite.Physics of the Solid State, Vol. 49, No. 2, pages. 205-210 (2007).
36. I. A. Smirnov, B. I. Smirnov, H. Misiorek, A. Jezowski, A. R. de Arellano-Lopez, J. Martinez-Fernandez, F. M. Varela-Feria, A. I. Krivchikov, G. A. Zviagina, and K. R. Zhekov Heat Capacity and Velocity of Sound in the SiC/Si Biomorphic Composite Physics of the Solid State, Vol. 49, N 10 1839-1844 (2007).
37. I. A. Smirnov, B. I. Smirnov, A. I. Krivchikov, H. Misiorek, A. Jezowski, A. R. de Arellano-Lopez, J. Martinez-Fernandez, R. Sepulveda. Heat Capacity of Silicon Carbide at Low Temperatures Physics of the Solid State, V49, N2 1835-1838 (2007).
38. F. M. Varela-Feria, J. Ramirez-Rico, A. R. de Arellano-López, J. Martinez-Fernández. Reaction-formation Mechanisms and Microstructure Evolution of Biomorphic SiC. Journal of Materials Science, DOI 10.1007/s10853-007-2207-4, published in (2008).
39. J. Martínez Fernández, A. Munoz, A. R. de Arellano López, F. M. Valera Feria, A. Dominguez-Rodriguez, and M. Singh "Microstructure-mechanical property correlation in siliconized silicon carbide ceramics"Acta Materialia, 51 [11] pp. 3259-3275 (2003).
40. A.R. de Arellano-López, J. Martínez-Fernández, P. González, C. Domínguez, V. Fernández-Quero, M. Singh. "Biomorphic sic: a new engineered ceramic material" (first volume) Int. Journal of Applied Ceramic Technology Vol. 1, pages. 95-100 (2004).

### DESCRIPTION OF THE INVENTION

The invention describes a method for producing porous ceramics and multiphasic materials from the infiltration of metallic alloys into carbon preforms obtained by pyrolysis of cellulosic precursors.

The selection of the cellulosic precursors is a step of great importance. A variety of different density wood can be used (pine, sapelli, beech, etc), and processed wood such as sheets of plywood or laminated plywood. The selected precursors must have a pores distribution that produces a microstructure, which is optimum for infiltration and therefore, the precursors will be different depending on the wetting behaviour of the alloys to be infiltrated.

The need to fabricate complex final shapes makes it essential to develop a versatile and robust system for joining these materials, which is also included in the invention.

In the fabrication process, six operative phases are established:

### 1. Precursor drying phase.

The precursor is subjected to a first drying phase that is carried out for 12 to 36 hours in an oven at a temperature between 50 °C and 100 °C if the precursor has been previously prepared for industrial use or for 36 to 150 hours if otherwise.

### 2. Pyrolysis process.

After drying, the cellulosic precursor is subjected to a pyrolysis process consisting in the decomposition of the organic material by heating; it is carried out in the absence of oxygen, in a way that the volatile substances and the water disappear like non-contaminant gases leaving carbon as a by-product of the process. Specifically in the invention process, the pyrolysis is carried out with partial pressures of oxygen of around 10⁻¹ Torr or lower, at a heating speed between 0.1 °C to 5 °C per minute, up to temperatures greater than 600 °C and a subsequent cooling at a speed of 1°C to 15°C per minute from the maximum temperature reached until it reaches ambient temperature.

### 3. Infiltration process.

Afterwards, an infiltration process is carried out with Si and with aluminium, magnesium, titanium, copper, iron, cobalt, nickel, chrome, gold, silver, tin, zinc and zirconium, applying pressures lower than 10⁻¹ torr and temperatures between 1400°C and 1700°C if the process occurs with Si, and between 700°C and 1900°C if the process occurs with the metals. The heating speed will be carried out at a speed of 0.1 °C to 20 °C per minute from ambient temperature until reaching the final temperature, depending on the cellulosic precursor that is used. The cooling phase will be carried out at a speed of 0.1 °C to 100 °C per minute from the maximum temperature reached, until the ambient temperature, depending on the cellulosic precursor that is used.

For the infiltration with Si process, the silicon dust, in solid form, will be located in areas that facilitate their subsequent infiltration in carbon preform, aided by capillarity through the pores. The entire process is carried out in a non reactive crucible, for example of Boron Nitride.

The quantity of silicon is calculated so that the atomic reaction (1:1) of the SiC compound is maintained. First, the carbon preform will be weighed and afterwards, the number of carbon moulds will be determined and subsequently, the amount of silicon to be used.

If this amount is increased by approximately 20%, a complete carbon reaction is guaranteed. The carbon that does not react, is burned during the usage of the piece at high temperature, affecting its microstructure.

During the infiltration with metal process, the interaction between the molten metal and the porous structure plays a fundamental and essential role. If pressure is not used, the molten metal must wet the carbon porous structure. The wettability describes if a liquid is separated from a solid substrate or if it adheres to it in order to wet it down. When a liquid and a solid are in contact, the balance of the surface energies between vapor and solid, solid and liquid and vapor and liquid determines the wettability of the liquid in the solid.

In order to improve the wettability, the infiltration can be carried out using alloys, which enables to change the wetting angle. The use of alloys also modifies the fusion point, so that the desired reactions can occur at a lower temperature. The alloys may contain silicon, aluminium, magnesium, titanium, molybdenum, copper, iron, cobalt, nickel, chrome, gold, silver, niobium, tin, zinc and zirconium in the carbon preform. It is carried out in a non-reactive crucible and applying a temperature between 700 °C and 1900 °C.

In this case, the silicon dust, in solid form, will be placed in areas that facilitate their subsequent infiltration in carbon preform, aided by capillarity through the pores. The entire process is carried out in a non reactive crucible, for example of Boron Nitride.

In these infiltrations, there is a large variety of situations, which range between infiltration using copper, which is non-reactive, to the generation of a wide range of second phases, product of chemical reactions.

For example, the use of Al-Si alloys are recommended for oven temperatures of around 1000°C, and result in the formation of Aluminium Carbide (Al₄C₃), a fragile inter-metallic, which would be detrimental to the compound mechanical characteristics. The content of silicon increases the wettability and prevents the formation of Al₄C₃ because it displaces the balance of the previous reaction towards the left. It also shows that magnesium plays a more important role than silicon when decreasing the contact Angle.

### 4. Selective elimination of silicon/metals/phases produced by reaction.

The use of metallic alloys in excess during the infiltration is carried out to ensure that all the carbon reacts or that the infiltration is complete. In order to selectively eliminate the silicon, metallic alloys or other phases produced through reaction, which exist after the infiltration process, the material that is fabricated using the aforementioned processes, is placed in contact with a carbon preform and the set is subjected to temperatures greater than 700 °C, with partial oxygen pressures of about 10⁻¹ Torr or lower.

Another procedure for selectively eliminating silicon/metal/phases produced by reaction during the infiltration process is through chemical attack with solutions containing one or several of the following compounds: HF, HNO₃, HCl, H₂SO₄.

For example, to eliminate any excess of silicon from the pores, a mixture of Nitric Acid (HNO₃) and Hydrofluoric Acid (HF). First, the Nitric Acid oxidizes the silicon forming Silicon Dioxide (SiO₂), which is eliminated from the HF pores.

*Si +* 4*HNO₃* → *SiO*₂ *+* 4*NO*₂ *+* 2*H*₂*O SiO*₂ *+* 6*HF* → *H*₂*SiF*₆ *+* 2*H*₂*O*

After eliminating the excess silicon, there is still a porous structure of Silicon Carbide present. The porous materials may have their pores open or closed due to the existence or lack of interconnectivity between pores. The term honeycomb structure refers to material with pores that are long, continuous and aligned in a single direction. Wood itself has an open porosity due to the star connections between axially aligned pores. Some of these connections may close during pyrolysis and the silicon infiltration, but there is evidence of the existence of open pores in the bioSiC.

The most common solvents for copper are a medium concentration of Nitric Acid, concentrated and hot Sulphuric Acid and Aqua Regis. Molybdenum is dissolved with hot and concentrated Sulphuric Acid, Aqua Regis or a mixture of Nitric Acid and Hydrofluoric Acid. Diluted Nitric Acid appreciably attacks it but concentrated, it passivates it through oxidation to insoluble MoO₃. Titanium is dissolved with concentrated Sulphuric Acid, in Aqua Regis, in mixtures of Nitric Acid and Hydrofluoric Acid. Aluminium is easily dissolved in diluted mineral acids (Sulphuric Acids, Hydrochloric, etc.) as well as in alkali.

### 5. Re-infiltration process.

A re-infiltration can be carried out of aluminium, magnesium, titanium, copper, iron, cobalt, nickel, chrome, gold, silver, tin, zinc, zirconium and with silicon, aluminium, magnesium, titanium, molybdenum, copper, iron, cobalt, nickel, chrome, gold, silver, niobium, tin, zinc, and zirconium alloys in porous ceramics obtained after carrying out the silicon elimination stages. It is carried out in a non-reactive crucible, applying a temperature between 700 °C and 1900 °C and pressures lower than 10⁻¹ Torr. The heating rate will be carried out at a speed of 0.1 °C to 20 °C per minute from ambient temperature until reaching the final temperature, depending on the cellulosic precursor that is used. The cooling phase will be carried out at a speed of 0.1 °C to 100 °C per minute from the maximum temperature reached, until the ambient temperature, depending on the cellulosic precursor that is used.

The use of alloys enables to modify the wetting angle and control the wettability, which is why the infiltration may be aided in the porous ceramic. If the infiltration does not occur due to capillarity, the melting can be forced to penetrate in the porous ceramic thanks to the use of ultra pure Argon at a pressure of 0 to 25 MPa.

### 6. Process for joining the materials used in steps 1-5.

The pieces are joined using a pressure of less than 100 MPa, inserting a paste containing Carbon, Silicon and small grains of Silicon Carbide between the pieces to be joined. The gas pressure will be lower than 10⁻¹ torr and the temperatures will be between 1400°C and 1700°C for materials fabricated using Si infiltration and between 700°C and 1900°C for materials fabricated using metal infiltrations. The heating speed will be carried out at a speed of 0.1 °C to 20 °C per minute from ambient temperature until reaching the final temperature, depending on the cellulosic precursor that is used. The cooling phase will be carried out at a speed of 0.1 °C to 100 °C per minute from the maximum temperature reached, until the ambient temperature, depending on the cellulosic precursor that is used.

A second type of joining process can be carried out by joining the carbon preforms using a pressure of less than 30 MPa, inserting a paste containing Carbon, Silicon and small grains of Silicon Carbide between the pieces to be joined and subsequently carry out the infiltration process described in section 3.

A third type of joining process can be carried out by joining the porous ceramics using a pressure of less than 100 MPa, inserting a paste containing Carbon, Silicon and small grains of Silicon Carbide between the pieces to be joined and subsequently carry out the infiltration process described in section 5.

These joints have a resistance similar to the materials fabricated using the method of this invention and therefore, it would not result in a loss of its properties during its use in specific applications.

Among the advantages of the described procedure we can highlight:
- Low cost, due to the low processing temperatures of around 600 and 900 °C, lower than the sintering process, because it does not require using silicon carbide dust like the sintering processes and because the pieces do not require a final finish.
- Use of re-generable materials, with the consequent non generation of environmental pollutants, being able to fabricate complex shapes by simple previous moulding of the source wood, because the use of additives are not required, a faster fabrication speed and a lower temperature than for fabrication processes based on gas reactions.
- The resulting ceramics possess the fibrous structure of the used wood, which is an ideal structure for optimum mechanical properties since it is the result of evolution process improvement. The products resulting from the silicon infiltration, with densities 50% lower, reach resistances similar to those of sintered silicon carbide and much higher than those of silicon carbide compacted by reaction.
- A structure similar to that of materials comprised of continuous fibre, are obtained of materials designed to improve the low intrinsic tenacity of the ceramics.
- A large range of micro structures and properties for specific applications can be obtained by simply using the proper plant precursor.
- The generation of mixed ceramic-metal materials opens a wide field of applications associated to the generation of multi-functional materials that combine a high mechanical resistance with custom designed electrical, magnetic, thermal and optic properties.
- The joints by reaction described in this invention enable to fabricate these materials with complex shapes and in a robust fashion, which opens a wide range of applications since these applications are not easy to achieve using conventional fabrication methods.

### EMBODIMENT METHOD FOR THE INVENTION

In order to illustrate the procedure described in this invention, the following example of the fabrication of a ceramic-metal compound material with an interpenetrated structure of silicon carbide and aluminium is provided.

### 1-Selection and drying of the plant precursor.

A parallelepiped of sipo commercial wood (Entandrophragma utile) measuring 40 x 40 x 10 mm is used. It is dried for a 36 hour period in an oven at a temperature of 70 °C. The weight of this piece of wood is 11.2 grams (density 0.70 g/cm³) after the drying.

### 2- Pyrolysis process.

The piece of wood is placed at the centre of a ceramic pipe (made of aluminium oxide) by which argon (an inert gas) is passed through at a pressure slightly greater than the atmospheric pressure. The pipe passes through the centre of an oven. The ends of the ceramic pipe are cooled so that the rubber seals located at these ends do not melt.

After a few minutes have elapsed and the argon flows through the ceramic pipe in a stable manner, the system is then heated up. It is heated at a speed of 0.4 °C per minute until reaching a final temperature of 1000 °C (the heating process lasts 41 hours and 40 minutes). The temperature of 1000 °C is maintained for 30 minutes and afterwards, it is cooled at a rate of 5 °C per minute (the cooling time is 3 hours and 20 minutes).

Via this process, the wood piece is transformed into Charcoal. The Charcoal piece now measures 23.1 mm x 23.1 mm x 7.7 mm. The weight of the Charcoal piece is 2.18 grams (density 0.53 g/cm³).

The Charcoal is machined into a disc shape. The disc has a diameter of 14.3 mm and a thickness of 2.1 mm. The weight of the disc is 0.18 g.

### 3.- Infiltration process.

Monocrystalline grams of silicon are placed over the piece of charcoal and it is then placed in a crucible that has its walls covered in Boron Nitride. The crysol is inserted in a pipe oven, in which a vacuum is induced using a rotary pump.

The system is heated at a rate of 10 °C per minute until reaching a final temperature of 1550 °C (the heating process lasts 2 hours and 25 minutes). It is maintained at a temperature of 1550 °C during 30 minutes. Subsequently, it is cooled at a rate of 10 °C per minute until reaching ambient temperature (the cooling time lasts 2 hours and 25 minutes).

Once the system has reached ambient temperature, the rotary pump is turned off, air is induced into the pipe, and the crysol is extracted.

The biomorphic ceramic sample that is obtained as a final result does not change its size within the measurement error and weighs 0.81 grams (density 2.42 g/cm³).

### 4.- Selective elimination of silicon/metals/phases produced by reaction.

The sample is inserted in a bath to eliminate the silicon by means of a chemical attack. It is carried out with a mixture of HF/HNO3 in proportions of 62.4% of HF volume and 37.6% of HNO3 volume, at ambient temperature, using 20 ml of solution and an attack time of 7 hours.

The weight of the piece after this process is 0.67 grams (density 1.98 g/cm³) and the sizes have not changed within the experimental error. The piece is cleaned with distilled water in an ultrasound bath for 24 hours.

### 5.- Re-infiltration process.

Three grams of aluminium dust are placed on the surface of the sample. A non-reactive crucible is carried out and applying temperatures of 800 °C and a pressure with argon gas of 5MPa, the heating is carried out at a speed 5 °C per minute from ambient temperature until the final temperature is reached, depending on the celullosic precursor that is used. The cooling phase is carried out at 10 °C per minute from the maximum reached temperature until ambient temperature is reached.

At the end of the process, the material maintains its size and weighs 0.83 g (density of 2.46 g/cm³).

## Claims

1. Method for fabricating ceramics and multiphasic materials from cellulosic precursors, **characterized** because they encompass the following stages:
a) Precursor drying.
b) Pyrolysis process.
c) Infiltration process.
d) Selective elimination of silicon/metals/phases produced by reaction.
e) Re-infiltration process.

2. Procedure for fabricating porous ceramics and multiphasic materials from cellulosic precursors in accordance with claim 1, **characterized** because the drying of the precursor is carried out for 12 to 36 hours in an oven at a temperature between 50 °C and 100 °C if the precursor has been previously prepared for industrial use, or for 36 to 150 hours if otherwise.

3. Procedure for fabricating porous ceramics and multiphasic materials from cellulosic precursors in accordance with claims 1 and 2, **characterized** because the pyrolysis phase has a heating phase with a heating rate between 0.1 °C to 5 °C per minute, from ambient temperature until reaching temperatures greater than 600 °C depending on the plant precursor that is used and a cooling phase at a rate of 1°C to 15°C per minute from the maximum temperature reached until it reaches ambient temperature.

4. Procedure for fabricating porous ceramics and multiphasic materials from cellulosic precursors in accordance with claims 1 and 3, **characterized** because the pyrolysis stage is carried out with partial oxygen pressures of about 10⁻¹ Torr or lower.

5. Procedure for fabricating porous ceramics and multiphasic materials from cellulosic precursors in accordance with claims 1 and 4, **characterized** because a silicon infiltration is carried out in the carbon preform obtained after carrying out the drying and pyrolysis stages to cellulosic precursor, applying a) temperatures between 1400°C and 1700°C, b) pressures lower than 10⁻¹ Torr c) heating rate of 0.1 °C to 20 °C per minute from ambient temperature until the final temperatures are reached depending on the celullosic precursor that is used and d) cooling rate of 0.1 °C to 100°C per minute from the maximum temperature until ambient temperature is reached depending on the cellulosic precursor that is used.

6. Procedure for fabricating porous ceramics and multiphasic materials from cellulosic precursors in accordance with claims 1 and 4, **characterized** because the following infiltrations are carried out in a non-reactive crucible: aluminium, magnesium, titanium, copper, iron, cobalt, nickel, chrome, gold, silver, tin, zinc, or zirconium, in the carbon preform obtained after carrying out the drying and pyrolysis stages to a cellulosic precursor, applying a) temperatures between 700°C and 1900°C, b) pressures lower than 10⁻¹ Torr c) heating rate of 0.1 °C to 20°C per minute from ambient temperature until the final temperature is reached depending on the cellulosic precursor that is used and d) cooling speed of 0.1 °C to 100°C per minute from the maximum temperature until ambient temperature is reached depending on the cellulosic precursor that is used.

7. Procedure for fabricating porous ceramics and multiphasic materials from cellulosic precursors in accordance with claim 6, **characterized** because the melting can be forced to penetrate in the porous ceramic using ultra pure argon at a pressure from 0 to 25 MPa, if the infiltration does not occur via capillarity.

8. Procedure for fabricating porous ceramics and multiphasic materials from cellulosic precursors in accordance with claims 1 to 4, **characterized** because the following alloy infiltrations are carried out in a non-reactive crucible: silicon, aluminium, magnesium, titanium, molybdenum, copper, iron, cobalt, nickel, chrome, gold, silver, niobium, tin, zinc, or zirconium, in the carbon preform obtained after carrying out the drying and pyrolysis stages to a cellulosic precursor, applying a) temperatures between 700°C and 1900°C, b) pressures lower than 10⁻¹ Torr c) heating rate of 0.1 °C to 20 °C per minute from ambient temperature until the final temperature is reached depending on the cellulosic precursor that is used and d) cooling speed of 0.1 °C to 100 °C per minute from the maximum temperature until ambient temperature is reached depending on the cellulosic precursor that is used.

9. Procedure for fabricating porous ceramics and multiphasic materials from cellulosic precursors in accordance with claim 8, **characterized** because the melting can be forced to penetrate in the porous ceramic using ultra pure argon at a pressure from 0 to 25 MPa, if the infiltration does not occur via capillarity.

10. Procedure for fabricating porous ceramics and multiphasic materials from cellulosic precursors in accordance with claims 1 to 9, **characterized** because the silicon/metal/phases produced by reaction that are present after the infiltration process are selectively eliminated through contact with a carbon preform after the drying and pyrolysis stages have been carried out and the set is subjected to temperatures greater than 700 °C, with partial oxygen pressures of about 10⁻¹ Torr or lower.

11. Procedure for fabricating porous ceramics and multiphasic materials from cellulosic precursors in accordance with claims 1 to 9, **characterized** because the silicon/metal/phases produced by reaction that are present after the infiltration process are selectively eliminated through chemical attack in solutions containing one or several of the following compounds: HF, HNO₃, HCl, H₂SO₄.

12. Procedure for fabricating porous ceramics and multiphasic materials from cellulosic precursors in accordance with claims 10 or 11, **characterized** because the following alloy infiltrations on the obtained porous ceramic are carried out in a non-reactive crucible: aluminium, magnesium, titanium, copper, iron, cobalt, nickel, chrome, gold, silver, tin, zinc, or zirconium, applying a) temperatures between 700°C and 1900°C, b) pressures lower than 10⁻¹ Torr c) heating rate of 0.1 °C to 20 °C per minute from ambient temperature until the final temperature is reached depending on the cellulosic precursor that is used and d) cooling speed of 0.1 °C to 100 °C per minute from the maximum temperature until ambient temperature is reached depending on the cellulosic precursor that is used.

13. Procedure for fabricating porous ceramics and multiphasic materials from cellulosic precursors in accordance with claim 12, **characterized** because the melting can be forced to penetrate in the porous ceramic using ultra pure argon at a pressure from 0 to 25 MPa, if the infiltration does not occur via capillarity.

14. Procedure for fabricating porous ceramics and multiphasic materials from cellulosic precursors in accordance with claims 10 or 11, **characterized** because the following alloy re-infiltrations are carried out in a non-reactive crucible: silicon, aluminium, magnesium, titanium, molybdenum, copper, iron, cobalt, nickel, chrome, gold, silver, niobium, tin, zinc, or zirconium, applying a) temperatures between 700°C and 1900°C, b) pressures lower than 10⁻¹ Torr c) heating rate of 0.1 °C to 20 °C per minute from ambient temperature until the final temperature is reached depending on the cellulosic precursor that is used and d) cooling speed of 0.1 °C to 100 °C per minute from the maximum temperature until ambient temperature is reached depending on the cellulosic precursor that is used.

15. Procedure for fabricating porous ceramics and multiphasic materials from cellulosic precursors in accordance with claim 14, **characterized** because the melting can be forced to penetrate in the porous ceramic using ultra pure argon at a pressure from 0 to 25 MPa, if the infiltration does not occur via capillarity.

16. Procedure for joining porous ceramics and multiphasic materials fabricated in accordance with clams 1 to 15, **characterized** because the pieces are joined together using a pressure of less than 100 MPa, inserting a paste containing Carbon, Silicon and small grains of Silicon Carbide between the pieces to be joined. The gas pressure will be lower than 10⁻¹ torr and the temperatures will be between 1400°C and 1700°C for materials fabricated using Si infiltration and between 700°C and 1900°C for materials fabricated using metal infiltrations. The heating speed will be carried out at a speed of 0.1 °C to 20 °C per minute from ambient temperature until reaching the final temperature, depending on the cellulosic precursor that is used. The cooling phase will be carried out at a speed of 0.1 °C to 100 °C per minute from the maximum temperature reached, until the ambient temperature, depending on the cellulosic precursor that is used.

17. Procedure for joining porous ceramics and multiphasic materials, **characterized** because the carbon preforms fabricated in accordance with claims 1 to 4, are joined using a pressure of less than 30 MPa, inserting a paste containing Carbon, Silicon and small grains of Silicon Carbide between the pieces to be joined and subsequently carry out the infiltration processes in accordance with claims 5 to 15.

18. Procedure for joining porous ceramics and multiphasic materials, **characterized** because the porous ceramics, fabricated in accordance with claims 1 to 11, are joined using a pressure of less than 100 MPa, inserting a paste containing Carbon, Silicon and small grains of Silicon Carbide between the pieces to be joined and subsequently carry out the infiltration processes in accordance with claims 12 to 15.

19. Porous ceramics and multiphasic materials obtained from cellulosic precursors in accordance with the procedure described in claims 1 to 18.

20. Use of porous ceramics and multiphasic materials obtained in accordance with claim 16 for applications based on its properties such as harness, resistance to friction, thermal conductivity, electro conductivity, mechanical resistance, high specific surface area, porosity, resistance to corrosion, resistance to thermal shock and density such as: filters, reinforcements, bullet proofing, heat exchangers, catalyst holders, brake components, components subjected to friction, heating elements, cutting elements, polishing elements, joining elements, nozzles, mechanical seals, oven utensils, particle traps, ignition systems, tools, decorative and/or artistic items, elements for melting, high temperature thermal tripping devices, over voltage protectors, lightning arrestors, transformer magnets, motors and generators, medical applications (implants, prosthesis, dental pieces), supports for cell growth.
